# EUROPEAN PATENT APPLICATION

(11) **EP 4 725 844 A1**
(43) Date of publication of application: **15.04.2026**
(21) Application number: 25208399.3
(22) Date of filing: 13.10.2025
(51) Int. Cl.: B64D 27/33, F02C 3/107

(54) **AIRCRAFT PROPULSION SYSTEM WITH SELECTIVELY ROTATABLE OPEN PROPULSOR ROTOR**

(30) Priority: 11.10.2024 US 202418913438
(71) Applicant: RTX Corporation, Farmington, CT 06032 (US)
(72) Inventor: MORTON, Jeffrey T., Manchester, 06040 (US); BREAULT, Andrew E., Bolton, 06043 (US)
(74) Representative: Dehns

(57) **Abstract**

A propulsion system (20) for an aircraft includes a first open propulsor rotor (40), a second open propulsor rotor (42), a turbine engine (32) and a drive system (34). The second open propulsor rotor (42) is next to and downstream of the first open propulsor rotor (40). The turbine engine (32) includes a flowpath (72), a compressor section (67), a combustor section (68), a turbine section (69) and a rotating assembly (90). The rotating assembly (90) includes a turbine rotor (81) in the turbine section (69). The rotating assembly (90) is configured to drive rotation of the first open propulsor rotor (40) during a first mode and a second mode. The drive system (34) is discrete from the rotating assembly (90). The drive system (34) is configured to drive rotation of the second open propulsor rotor (42) during the first mode. The second open propulsor rotor (42) is rotationally fixed during the second mode.

## Description

### BACKGROUND OF THE INVENTION

### 1. Technical Field

This invention relates generally to an aircraft propulsion system and, more particularly, to an open rotor aircraft propulsion system.

### 2. Background Information

Various types and configurations of aircraft propulsion systems are known in the art including those with one or more open propulsor rotors. While these known aircraft propulsion systems have various benefits, there is still room in the art for improvement.

### SUMMARY OF THE INVENTION

According to an aspect of the present invention, a propulsion system is provided for an aircraft. This aircraft propulsion system includes a first open propulsor rotor, a second open propulsor rotor, a turbine engine and a drive system. The second open propulsor rotor is next to and downstream of the first open propulsor rotor (for example, the second open propulsor rotor may be arranged downstream of the first open propulsor rotor without any other propulsor rotors or guide vane structures axially therebetween). The turbine engine includes a flowpath, a compressor section, a combustor section, a turbine section and a rotating assembly. The flowpath extends longitudinally though the compressor section, the combustor section and the turbine section from an airflow inlet into the flowpath to a combustion products exhaust from the flowpath. The rotating assembly includes a turbine rotor in the turbine section. The rotating assembly is configured to drive rotation of the first open propulsor rotor during a first mode and a second mode. The drive system is discrete from the rotating assembly. The drive system is configured to drive rotation of the second open propulsor rotor during the first mode. The second open propulsor rotor is rotationally fixed during the second mode.

According to another aspect of the present invention, another propulsion system is provided for an aircraft. This aircraft propulsion system includes a propulsion section, a turbine engine and a drive system. The propulsion section includes a first open propulsor rotor and a second open propulsor rotor. The turbine engine is configured to mechanically drive rotation of the first open propulsor rotor during a first mode and a second mode. The turbine engine includes a flowpath, a compressor section, a combustor section and a turbine section. The flowpath extends longitudinally though the compressor section, the combustor section and the turbine section from an airflow inlet into the flowpath to a combustion products exhaust from the flowpath. The drive system is configured as or otherwise includes an electric machine. The drive system is configured to drive rotation of the second open propulsor rotor during the first mode using the electric machine. The second open propulsor rotor is rotationally fixed during the second mode.

According to still another aspect of the present invention, another propulsion system is provided for an aircraft. This aircraft propulsion system includes a propulsion section, a turbine engine and a drive system. The propulsion section includes a first open propulsor rotor and a second open propulsor rotor. The turbine engine is configured to mechanically drive rotation of the first open propulsor rotor during a first mode and a second mode. The turbine engine includes a flowpath, a compressor section, a combustor section and a turbine section. The flowpath extends longitudinally though the compressor section, the combustor section and the turbine section from an airflow inlet into the flowpath to a combustion products exhaust from the flowpath. The drive system is configured as or otherwise includes an air turbine. The air turbine is configured to receive bleed air from the flowpath of the turbine engine. The drive system is configured to drive rotation of the second open propulsor rotor during the first mode using the air turbine. The second open propulsor rotor is configured as a guide vane structure for the first open propulsor rotor during the second mode.

The terms "upstream" and "downstream" used herein are relative to a flow of air passing through the first and second open propulsor rotors during normal operation of the propulsion system.

Optionally, and in accordance with any of the above, the aircraft propulsion system further includes a brake configured to: brake rotation of the second open propulsor rotor; and/or rotationally fix the second open propulsor rotor during the second mode.

Optionally, and in accordance with any of the above, the brake may be configured as or otherwise include the electric machine. The electric machine may be operable as an electric motor during the first mode. The electric machine may be operable as an electromagnetic brake during the second mode.

Optionally, and in accordance with any of the above, the second open propulsor rotor may be configured as a guide vane structure for the first open propulsor rotor during the second mode.

Optionally, and in accordance with any of the above, the first open propulsor rotor and the second open propulsor rotor may be configured to rotate in opposite directions about a common axis in the first mode.

Optionally, and in accordance with any of the above, the propulsion system may extend along an axis between an upstream end of the propulsion system and a downstream end of the propulsion system. The first open propulsor rotor may be located axially between the upstream end of the propulsion system and the turbine engine.

Optionally, and in accordance with any of the above, the first open propulsor rotor may be configured to rotate a first rotational direction during the first mode. The second open propulsor rotor may be configured to rotate a second rotational direction during the first mode that is opposite the first rotational direction.

Optionally, and in accordance with any of the above, the drive system may be configured such that a ratio of a rotational speed of the first open propulsor rotor to a rotational speed of the second open propulsor rotor is variable during the first mode.

Optionally, and in accordance with any of the above, the aircraft propulsion system may also include a brake configured to brake rotation of the second open propulsor rotor and/or rotationally fix the second open propulsor rotor during the second mode.

Optionally, and in accordance with any of the above, the second open propulsor rotor may include a plurality of blades arranged circumferentially about an axis. Each of the blades may have a respective blade pitch and may be configured to pivot about a respective pivot axis to change the respective blade pitch during the first mode and/or the second mode.

Optionally, and in accordance with any of the above, the drive system may be configured as or otherwise include an electric machine. The drive system may be configured to drive the rotation of the second open propulsor rotor using the electric machine during the first mode.

Optionally, and in accordance with any of the above, the drive system may be configured to brake rotation of the second open propulsor rotor and/or rotationally fix the second open propulsor rotor during the second mode using the electric machine.

Optionally, and in accordance with any of the above, the aircraft propulsion system may also include a mechanical brake configured to brake rotation of the second open propulsor rotor and/or rotationally fix the second open propulsor rotor during the second mode.

Optionally, and in accordance with any of the above, the rotating assembly may also be configured to drive rotation of the first open propulsor rotor during a third mode. The electric machine may be configurable as a generator during the third mode when a machine rotor in the electric machine is rotationally driven by the second open propulsor rotor.

Optionally, and in accordance with any of the above, the drive system may be configured as or otherwise include an air turbine. The drive system may be configured to drive the rotation of the second open propulsor rotor using the air turbine during the first mode.

Optionally, and in accordance with any of the above, the drive system may also include an air circuit configured to: bleed air from the flowpath along or downstream of the compressor section; and/or direct the air to the air turbine.

Optionally, and in accordance with any of the above, the compressor section may include a low pressure compressor section and a high pressure compressor section. The air circuit may be configured to bleed air from the flowpath upstream of the high pressure compressor section.

Optionally, and in accordance with any of the above, the compressor section may include a low pressure compressor section and a high pressure compressor section. The air circuit may be configured to bleed air from the flowpath downstream of the low pressure compressor section.

Optionally, and in accordance with any of the above, the aircraft propulsion system may also include a brake configured to: brake rotation of the second open propulsor rotor; and/or rotationally fix the second open propulsor rotor during the second mode.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a side schematic illustration of an aircraft propulsion system.
FIG. 2 is a partial side schematic illustration of the aircraft propulsion system at a propulsion section.
FIGS. 3-6 are partial side schematic illustrations of the aircraft propulsion system with various drivetrain system arrangements coupling an engine rotating structure to an aft open propulsor rotor.
FIG. 7 is a partial side schematic illustration of the aft open propulsor rotor coupled to an electric machine with an electrical power source.
FIGS. 8 and 9 are partial side schematic illustrations of the aircraft propulsion system with various air circuit arrangements coupling an air turbine to an engine flowpath.

### DETAILED DESCRIPTION

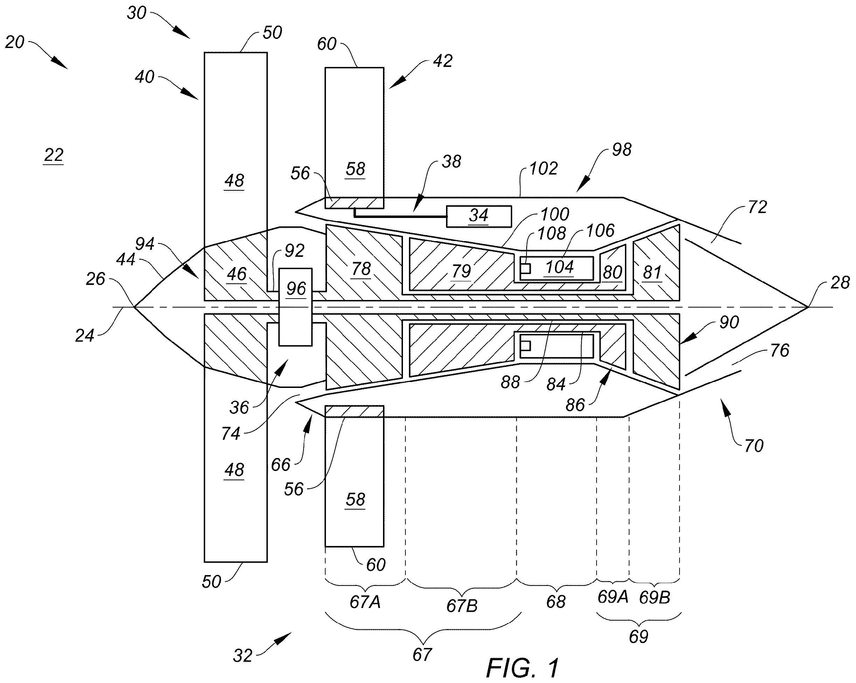

FIG. 1 is a side schematic illustration of a propulsion system 20 for an aircraft. The aircraft may be an airplane, a drone (e.g., an unmanned aerial vehicle (UAV)) or any other manned or unmanned aerial vehicle or system. The aircraft propulsion system 20 of FIG. 1 is configured as an open rotor propulsion system with a swirl recovery blade (SRB) open rotor architecture. With such an open rotor architecture, the aircraft propulsion system 20 may operate as: (A) a counter-rotating open rotor (CROR) propulsion system during a dual rotor mode of operation; and (B) a single open rotor and swirl recovery vane (SRV) propulsion system during a single rotor mode of operation. The aircraft propulsion system 20 of the present invention, however, is not limited to operating in such exemplary dual rotor and single rotor modes as described below in further detail. Herein, the term "open" may describe a propulsion system section and/or a propulsion system component which is open to an environment 22 (e.g., an ambient environment) external to the aircraft propulsion system 20 and, more generally, the aircraft.

The aircraft propulsion system 20 extends axially along an axis 24 between an upstream, forward end 26 of the aircraft propulsion system 20 and a downstream, aft end 28 of the aircraft propulsion system 20. The propulsion system axis 24 may be a centerline axis of the aircraft propulsion system 20 and/or a centerline axis of one or more members of the aircraft propulsion system 20. The propulsion system axis 24 may also or alternatively be a rotational axis of one or more members of the aircraft propulsion system 20. The aircraft propulsion system 20 of FIG. 1 includes an open rotor propulsion section 30, a gas turbine engine 32, a rotor drive system 34 and a drivetrain system, where the drivetrain system of FIG. 1 includes a forward rotor drivetrain 36 and an aft rotor drivetrain 38. Briefly, as described below in further detail, the rotor drive system 34 may be configured as an integral part of the turbine engine 32 or discrete from the turbine engine 32.

The propulsion section 30 of FIG. 1 includes an upstream, forward open propulsor rotor 40 and a multi-function downstream, aft open propulsor rotor 42. These open propulsor rotors 40 and 42 are un-ducted and unshrouded components of the aircraft propulsion system 20 and its propulsion section 30. The propulsion section 30 of FIG. 1 also includes a nose cone 44 disposed at (e.g., on, adjacent or proximate) the propulsion system forward end 26. Briefly, this nose cone 44 may be configured as a spinner which is rotatable with the forward open propulsor rotor 40 about the propulsion system axis 24. Alternatively, the nose cone 44 may be configured as a stationary structure of the propulsion section 30.

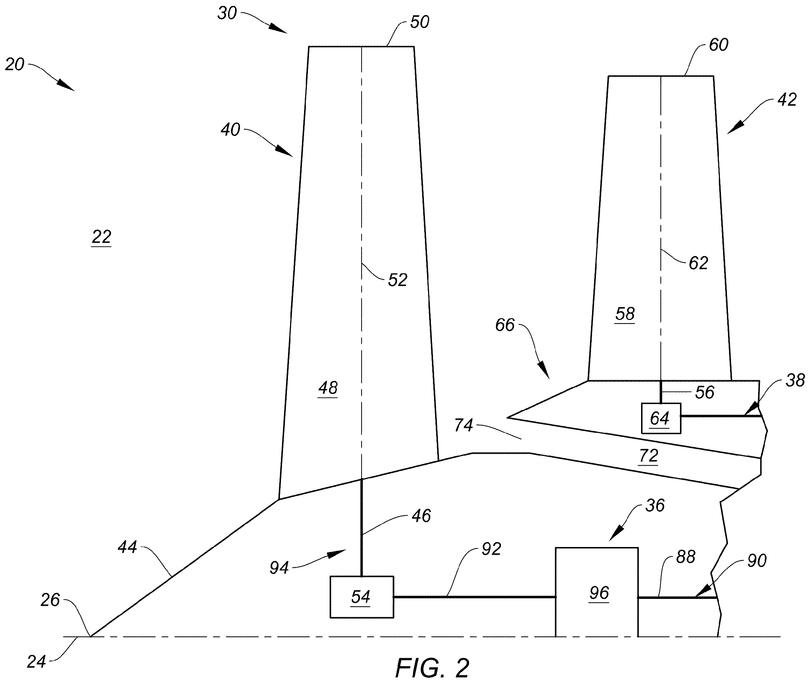

Referring to FIG. 2, the forward open propulsor rotor 40 includes a forward rotor base 46 (e.g., a disk or a hub) and a plurality of open forward propulsor blades 48 (e.g., airfoils). The forward propulsor blades 48 are arranged and may be equispaced circumferentially about the forward rotor base 46 and the propulsion system axis 24 in an array; e.g., a circular array. Each of the forward propulsor blades 48 is connected to (e.g., formed integral with or otherwise attached to) the forward rotor base 46. Each of the forward propulsor blades 48 projects spanwise along a span line of the respective forward propulsor blade 48 (e.g., radially relative to the propulsion system axis 24) out from an exterior surface of the forward rotor base 46, into the external environment 22, to an unshrouded distal tip 50 of the respective forward propulsor blade 48. Each forward propulsor blade 48 is thereby configured as an un-ducted and unshrouded propulsor blade which is exposed to (e.g., disposed in) the surrounding external environment 22.

Each forward propulsor blade 48 may be configured to pivot about a respective forward blade pivot axis 52. This forward blade pivot axis 52 extends radially relative to the propulsion system axis 24. The forward blade pivot axis 52 of FIG. 2, for example, is arranged perpendicular to the propulsion system axis 24 when viewed, for example, in a longitudinal reference plane parallel to (e.g., including) the propulsion system axis 24; e.g., the plane of FIG. 2. Each forward propulsor blade 48 of FIG. 2 is operatively coupled with a forward blade actuation system 54. This forward blade actuation system 54 is configured to pivot each forward propulsor blade 48 about its own respective forward blade pivot axis 52. By pivoting each forward propulsor blade 48 about its forward blade pivot axis 52, a pitch of the respective forward propulsor blade 48 may be changed. Note, while the forward blade pivot axis 52 is shown in FIG. 2 as being perpendicular to the propulsion system axis 24, it is contemplated this forward blade pivot axis 52 may or may not be coincident with the propulsion system axis 24. Moreover, it is contemplated each forward blade pivot axis 52 may alternatively be angularly offset from the propulsion system axis 24 by an acute angle or an obtuse angle when viewed, for example, in the longitudinal reference plane. Of course, it is contemplated some or all of the forward propulsor blades 48 may be alternatively moved to change the forward propulsor blade pitch. Moreover, it is contemplated some or all of the forward propulsor blades 48 may alternatively be fixed pitch forward propulsor blades 48 in other embodiments.

The aft open propulsor rotor 42 includes an aft rotor base 56 (e.g., a disk or a hub) and a plurality of open aft propulsor blades 58 (e.g., airfoils). This aft open propulsor rotor 42 and its aft propulsor blades 58 are arranged axially next to (e.g., adjacent) the forward open propulsor rotor 40 and its forward propulsor blades 48 within the external environment 22. The aft open propulsor rotor 42 and its aft propulsor blades 58 of FIG. 2, for example, are arranged downstream and aft of the forward open propulsor rotor 40 and its forward propulsor blades 48, without (e.g., any) other propulsor rotors or guide vane structures axially therebetween to further propel and/or turn the air propelled by the forward open propulsor rotor 40 within the external environment 22 in an axial downstream, aft direction (e.g., left-to-right in FIGS. 1 and 2) towards the aft open propulsor rotor 42. In addition, the aft open propulsor rotor 42 and its aft rotor base 56 may extend axially along and circumscribe the turbine engine 32. By contrast, the forward open propulsor rotor 40 and its forward rotor base 46 of FIG. 1 are disposed axially between the propulsion system forward end 26 and the turbine engine 32.

The aft propulsor blades 58 are arranged and may be equispaced circumferentially about the aft rotor base 56 and the propulsion system axis 24 in an array; e.g., a circular array. Each of the aft propulsor blades 58 is connected to (e.g., formed integral with or otherwise attached to) the aft rotor base 56. Each of the aft propulsor blades 58 projects spanwise along a span line of the respective aft propulsor blade 58 (e.g., radially relative to the propulsion system axis 24) out from an exterior surface of the aft rotor base 56, into the external environment 22, to an unshrouded distal tip 60 of the respective aft propulsor blade 58. Each aft propulsor blade 58 is thereby configured as an un-ducted and unshrouded propulsor blade which is exposed to (e.g., disposed in) the surrounding external environment 22.

Each aft propulsor blade 58 may be configured to pivot about a respective aft blade pivot axis 62. This aft blade pivot axis 62 extends radially relative to the propulsion system axis 24. The aft blade pivot axis 62 of FIG. 2, for example, is arranged perpendicular to the propulsion system axis 24 when viewed, for example, in the longitudinal reference plane. Each aft propulsor blade 58 of FIG. 2 is operatively coupled with an aft blade actuation system 64, which aft blade actuation system 64 may be discrete from or integrated as part of the forward blade actuation system 54. The aft blade actuation system 64 is configured to pivot each aft propulsor blade 58 about its own respective aft blade pivot axis 62. By pivoting each aft propulsor blade 58 about its aft blade pivot axis 62, a pitch of the respective aft propulsor blade 58 may be changed. Note, while the aft blade pivot axis 62 is shown in FIG. 2 as being perpendicular to the propulsion system axis 24, it is contemplated this aft blade pivot axis 62 may or may not be coincident with the propulsion system axis 24. Moreover, it is contemplated each aft blade pivot axis 62 may alternatively be angularly offset from the propulsion system axis 24 by an acute angle or an obtuse angle when viewed, for example, in the longitudinal reference plane. Of course, it is contemplated some or all of the aft propulsor blades 58 may be alternatively moved to change the aft propulsor blade pitch. Moreover, it is contemplated some or all of the aft propulsor blades 58 may alternatively be fixed pitch aft propulsor blades 58 in other embodiments.

Referring to FIG. 1, the turbine engine 32 includes an inlet section 66, a compressor section 67, a combustor section 68, a turbine section 69 and an exhaust section 70. The compressor section 67 of FIG. 1 includes a low pressure compressor (LPC) section 67A and a high pressure compressor (HPC) section 67B. The turbine section 69 of FIG. 1 includes a high pressure turbine (HPT) section 69A and a low pressure turbine (LPT) section 69B. The turbine engine 32 also includes an (e.g., annular) engine flowpath 72 which extends longitudinally through the aircraft propulsion system 20 of FIG. 1 and its turbine engine 32 from an (e.g., annular) airflow inlet 74 into the engine flowpath 72 to a (e.g., annular) combustion products exhaust 76 from the engine flowpath 72. Here, the flowpath inlet 74 is also an airflow inlet into the aircraft propulsion system 20 of FIG. 1 and its turbine engine 32. The flowpath exhaust 76 is also a combustion products exhaust from the aircraft propulsion system 20 of FIG. 1 and its turbine engine 32.

Each of the engine sections 67A, 67B, 69A and 69B includes a respective bladed rotor 78-81; e.g., a ducted and/or shrouded engine rotor. Each of these engine rotors 78-81 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 72. Each of the rotor blades is connected to the respective rotor base. Each of the rotor blades projects radially (e.g., spanwise) out from the respective rotor base into the engine flowpath 72 and to a distal tip of the respective rotor blade.

The HPC rotor 79 is coupled to and rotatable with the HPT rotor 80. The HPC rotor 79 of FIG. 1, for example, is connected to the HPT rotor 80 by a high speed shaft 84. At least (or only) the HPC rotor 79, the HPT rotor 80 and the high speed shaft 84 collectively form a high speed rotating assembly 86; e.g., a high speed spool of a core (e.g., a gas generator) of the turbine engine 32. This high speed rotating assembly 86 of FIG. 1 and its members 79, 80 and 84 are rotatable about the propulsion system axis 24. However, in other embodiments, the high speed rotating assembly 86 and its members 79, 80 and 84 may alternatively be rotatable about another rotational axis which is (e.g., laterally and/or angularly) offset from an axis of the forward open propulsor rotor 40 and/or an axis of the aft open propulsor rotor 42.

The LPC rotor 78 is coupled to and rotatable with the LPT rotor 81. The LPC rotor 78 of FIG. 1, for example, is connected to the LPT rotor 81 by a low speed shaft 88. At least (or only) the LPC rotor 78, the LPT rotor 81 and the low speed shaft 88 collectively form a low speed rotating assembly 90; e.g., a low speed spool of the turbine engine 32 and its engine core. This low speed rotating assembly 90 of FIG. 1 and its members 78, 81 and 88 are rotatable about the propulsion system axis 24. However, in other embodiments, the low speed rotating assembly 90 and its members 78, 81 and 88 may alternatively be rotatable about another rotational axis which is (e.g., laterally and/or angularly) offset from the axis of the forward open propulsor rotor 40 and/or the axis of the aft open propulsor rotor 42.

The forward open propulsor rotor 40 is connected to and rotatable with a forward propulsor shaft 92. At least (or only) the forward open propulsor rotor 40 and the forward propulsor shaft 92 collectively form a forward propulsor rotating assembly 94. This forward propulsor rotating assembly 94 of FIG. 1 and its members 40 and 92 are rotatable about the propulsion system axis 24. The forward propulsor rotating assembly 94 of FIG. 1 is coupled to the low speed rotating assembly 90 through the drivetrain system and its forward rotor drivetrain 36. This forward rotor drivetrain 36 may be configured as a geared drivetrain, where a geartrain 96 (e.g., a transmission, a speed change device, an epicyclic geartrain, etc.) is disposed between and operatively couples the forward propulsor rotating assembly 94 and its forward propulsor shaft 92 to the low speed rotating assembly 90 and its low speed shaft 88. With this arrangement, the forward open propulsor rotor 40 may rotate at a different (e.g., slower) rotational speed than the low speed rotating assembly 90 and its LPT rotor 81. However, the forward rotor drivetrain 36 may alternatively be configured as a direct drive drivetrain, where the geartrain 96 is omitted. With this arrangement, the forward open propulsor rotor 40 and the LPT rotor 81 may rotate at a common (the same) rotational speed.

The aft open propulsor rotor 42 is coupled to the rotor drive system 34 through the aft rotor drivetrain 38. Various rotor drive system arrangements and various aft rotor drivetrain arrangements are described below in further detail.

The engine sections 66-70 may be arranged sequentially along the propulsion system axis 24 and are housed within and/or formed by a propulsion system housing 98. This propulsion system housing 98 includes an engine case 100 (e.g., a gas generator case) and a nacelle 102. The engine case 100 houses one or more of the engine sections 67A-69B; e.g., the engine core. The engine case 100 of FIG. 1, for example, extends axially along (e.g., axially overlaps) and extends circumferentially about (e.g., circumscribes) the engine sections 67A-69B and their respective bladed rotors 78-81. The engine case 100 may also house the geartrain 96. The nacelle 102 houses and provides an aerodynamic cover over the engine case 100. An exterior wall of the nacelle 102 of FIG. 1, for example, is disposed radially outboard of, extends axially along (e.g., axially overlaps) and extends circumferentially about (e.g., circumscribes) the engine core and its engine case 100. With this arrangement, the bladed rotors 78-81 are disposed within the propulsion system housing 98. By contrast, the forward open propulsor rotor 40 and the aft open propulsor rotor 42 are disposed at least partially (or completely) outside of the propulsion system housing 98.

During operation of the aircraft propulsion system 20 of FIG. 1, ambient air within the external environment 22 is propelled by the rotating forward open propulsor rotor 40 in the downstream, aft direction towards the propulsion system aft end 28. A major portion (e.g., more than 50%) of this air bypasses the turbine engine 32 to provide forward thrust while a minor portion (e.g., less than 50%) of the air flows into the turbine engine 32. For example, an outer stream of the air propelled by the forward open propulsor rotor 40 flows axially across the aft open propulsor rotor 42 and outside of the propulsion system housing 98; e.g., along an exterior of the nacelle 102. During the dual rotor mode, the aft open propulsor rotor 42 rotates and further propels and conditions (e.g., straightens out) the outer stream of air within the external environment 22 to enhance (e.g., remove or reduce circumferential swirl) and boost the forward thrust. In general, during this dual rotor mode, the forward open propulsor rotor 40 rotates in a first rotational direction (e.g., clockwise or counterclockwise) about the propulsion system axis 24, and the aft open propulsor rotor 42 rotates in a second rotational direction (e.g., counterclockwise or clockwise) about the propulsion system axis 24 that is rotationally opposite the first rotational direction. During the single rotor mode, the aft open propulsor rotor 42 is stationary and conditions the outer stream of air within the external environment 22 to enhance the forward thrust; e.g., functions as a guide vane structure for the forward open propulsor rotor 40. By contrast, an inner stream of the air propelled by the rotating forward open propulsor rotor 40 may bypass the aft open propulsor rotor 42 and enter the turbine engine 32 and its engine flowpath 72 through the flowpath inlet 74. The air entering the engine flowpath 72 through the flowpath inlet 74 may be referred to as "core air".

The core air is compressed by the LPC rotor 78 and the HPC rotor 79 and directed into a combustion chamber 104 (e.g., an annular combustion chamber) of a combustor 106 (e.g., an annular combustor) in the combustor section 68. Fuel is injected into the combustion chamber 104 by one or more fuel injectors 108 and mixed with the compressed core air to provide a fuel-air mixture. This fuel-air mixture is ignited and combustion products thereof flow through and sequentially drive rotation of the HPT rotor 80 and the LPT rotor 81. The rotation of the HPT rotor 80 and the LPT rotor 81 respectively drive rotation of the HPC rotor 79 and the LPC rotor 78 and, thus, compression of the core air. The rotation of the LPT rotor 81 also drives the rotation of at least the forward open propulsor rotor 40 through the forward rotor drivetrain 36 and its geartrain 96. The turbine engine 32 and its low speed rotating assembly 90 thereby power operation of (e.g., drive rotation of) at least the forward open propulsor rotor 40 during aircraft propulsion system operation. Concurrently, during the dual rotor mode, the rotor drive system 34 drives the rotation of the aft open propulsor rotor 42 through the aft rotor drivetrain 38.

The engine flowpath 72 of FIG. 1 extends longitudinally from the flowpath inlet 74, sequentially through the inlet section 66, the LPC section 67A, the HPC section 67B, the combustor section 68, the HPT section 69A, the LPT section 69B and the exhaust section 70, to the flowpath exhaust 76. The engine flowpath 72 of FIG. 1 is configured such that the core air and the combustion products generally flow in the aft, downstream direction towards the propulsion system aft end 28. The core air and the combustion products thereby flow along with the ambient air propelled by the rotating open propulsor rotor(s) 40, 42 in a common axial direction - the downstream, aft direction. The turbine engine 32 of the present invention, however, is not limited to such an exemplary common flow engine arrangement. For example, the engine flowpath 72 may alternatively be configured such that the core air and the combustion products generally flow in a forward, upstream direction towards the propulsion system forward end 26. The core air and the combustion products may thereby flow in an opposite direction as the ambient air propelled by the rotating open propulsor rotor(s) 40, 42. Here, the turbine engine 32 may have a reverse flow engine arrangement.

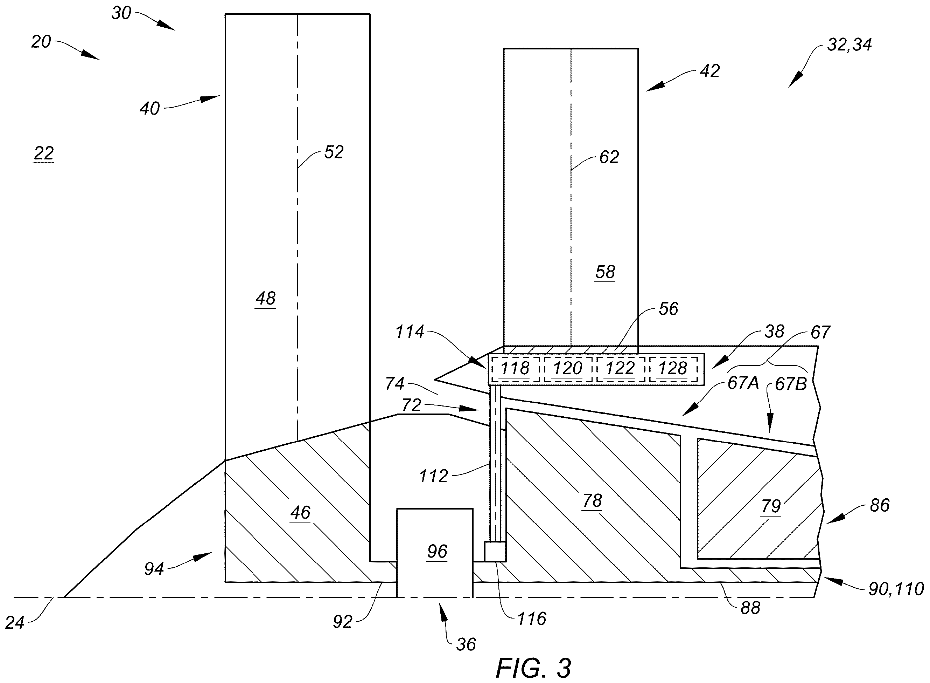

In some embodiments, referring to FIGS. 3-6, the rotor drive system 34 may be configured as or otherwise include an engine rotating assembly 110 of the turbine engine 32 and, more generally, the turbine engine 32. Here, the aft rotor drivetrain 38 may include a tower shaft 112 and a power transmission arrangement 114.

A radial inner end of the tower shaft 112 of FIGS. 3-6 is operatively coupled to the engine rotating assembly 110 through, for example, a ring and pinion coupling 116. A radial outer end of the tower shaft 112 of FIGS. 3-6 is operatively coupled to the power transmission arrangement 114. The power transmission arrangement 114 is configured to selectively transfer mechanical power, received from the engine rotating assembly 110 through the tower shaft 112, to the aft open propulsor rotor 42. The power transmission arrangement 114 of FIGS. 3-6, for example, includes a gearbox 118 (e.g., an angle gearbox, a bevel gearbox, etc.), a clutch 120 and a transmission 122. The gearbox 118 is between and mechanically couples the tower shaft 112 and the clutch 120. The clutch 120 is configured to mechanically couple an output from the gearbox 118 to an input into the transmission 122 during at least (or only) the dual rotor mode. By contrast, the clutch 120 is configured to mechanically uncouple the output from the gearbox 118 from the input into the transmission 122 during at least (or only) the single rotor mode. In some embodiments, the aft rotor drivetrain 38 may include a locking mechanism (e.g., brake 128) to lock and/or hold the open propulsor rotor 42 in place while operating in the single rotor mode. The transmission 122 is configured to mechanically couple an output from the clutch 120 to the aft rotor base 56. This transmission 122 may be a continuously variable transmission (CVT) or another type of infinite or multi-speed transmission. With this arrangement, the rotational speed of the aft open propulsor rotor 42 may be varied during the dual rotor mode without being directly tied to the rotational speed of the engine rotating assembly 110. Moreover, during the dual rotor mode, a ratio between the rotational speed of the forward open propulsor rotor 40 (see FIGS. 1 and 2) and the rotational speed of the aft open propulsor rotor 42 may be varied to tailor propulsion section operation to one or more propulsion system operational parameters, one or more aircraft operational parameters and/or one or more environmental conditions. Of course, it is contemplated the power transmission arrangement 114 may also include one or more driveshafts and/or other couplings. Moreover, while the power transmission arrangement members 118, 120, 122 and 128 are described above in an exemplary order operatively between the aft open propulsor rotor 42 and the tower shaft 112, it is contemplated these members 118, 120, 122 and 128 may alternatively be arranged in other orders operatively between the aft open propulsor rotor 42 and the tower shaft 112. For example, the clutch 120 may alternatively be disposed operatively between the aft open propulsor rotor 42 and the gearbox 118.

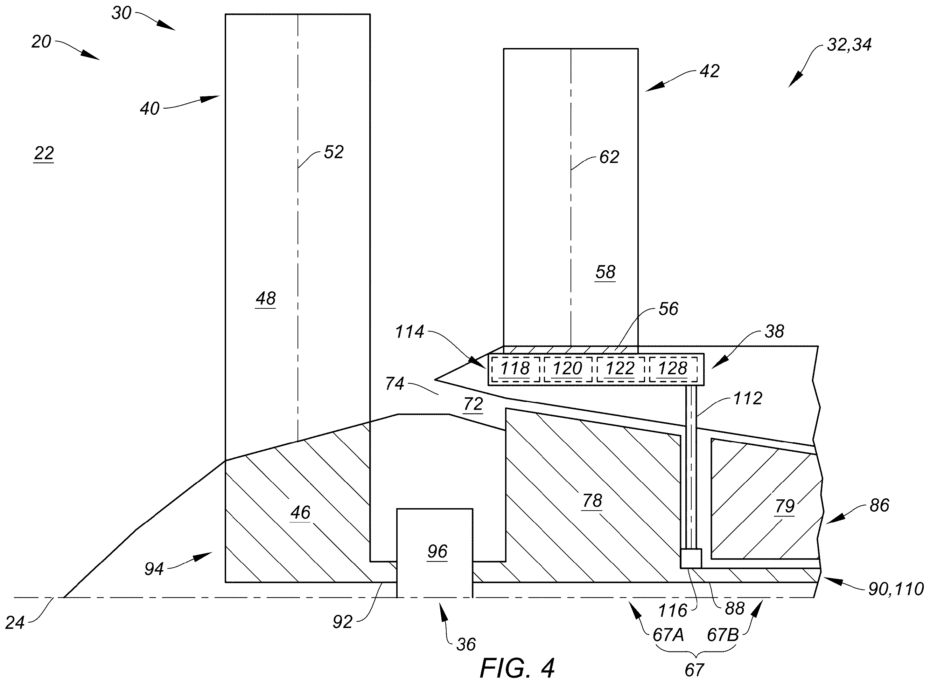

In some embodiments, referring to FIGS. 3 and 4, the engine rotating assembly 110 may be configured as the low speed rotating assembly 90. In the arrangement of FIG. 3, the tower shaft 112 is coupled to the low speed rotating assembly 90 at or near an upstream, forward end of the LPC rotor 78; e.g., axially between the geartrain 96 and the LPC rotor 78. In the arrangement of FIG. 4, the tower shaft 112 is coupled to the low speed rotating assembly 90 at or near a downstream, aft end of the LPC rotor 78; e.g., axially between the LPC rotor 78 and the HPC rotor 79.

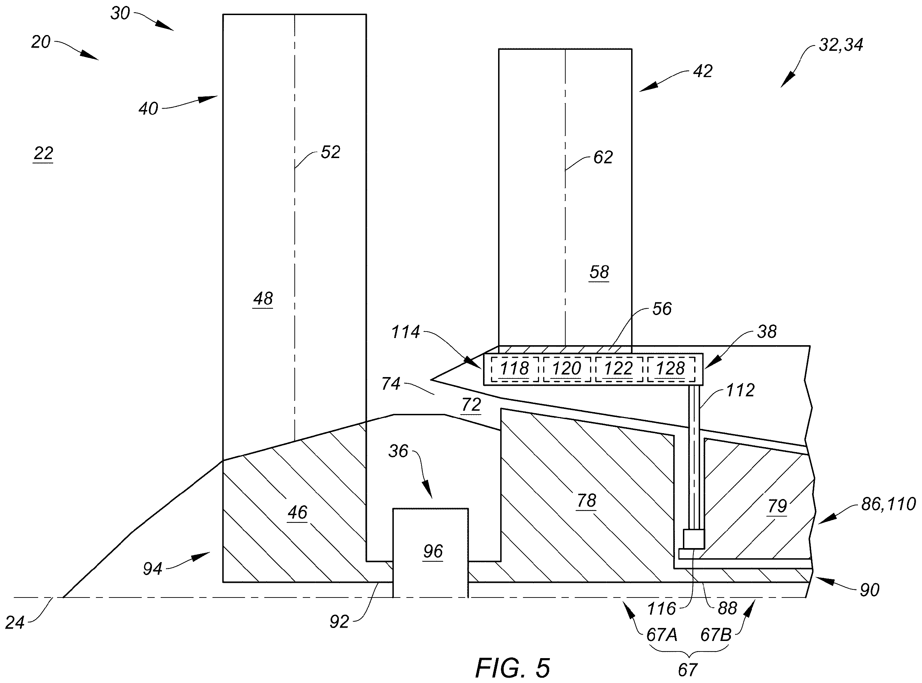

In some embodiments, referring to FIG. 5, the engine rotating assembly 110 may be configured as the high speed rotating assembly 86. In the arrangement of FIG. 5, the tower shaft 112 is coupled to the high speed rotating assembly 86 at or near an upstream, forward end of the HPC rotor 79; e.g., axially between the LPC rotor 78 and the HPC rotor 79.

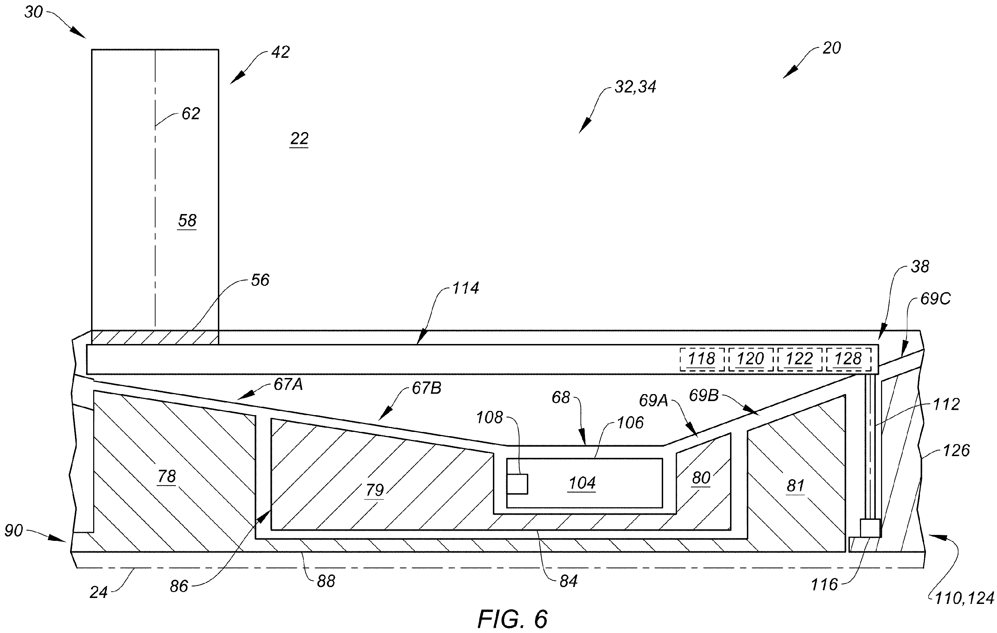

In some embodiments, referring to FIG. 6, the engine rotating assembly 110 may be configured as a power turbine (PT) rotating assembly 124 for the turbine engine 32. This power turbine rotating assembly 124 includes a power turbine (PT) rotor 126 in a power turbine (PT) section 69C of the turbine section 69. Briefly, the PT section 69C is arranged longitudinally along the engine flowpath 72 between the turbine section 69B (here, an intermediate pressure turbine (IPT) section) and the exhaust section 70. In the arrangement of FIG. 6, the tower shaft 112 is coupled to the power turbine rotating assembly 124 at or near an upstream, forward end of the PT rotor 126; e.g., axially between the turbine rotor 81 and the PT rotor 126. The power turbine rotating assembly 124 and its PT rotor 126 of FIG. 6 may be dedicated to driving rotation of the aft open propulsor rotor 42. The power turbine rotating assembly 124 and its PT rotor 126 of FIG. 6, for example, do not drive rotation of any compressor rotors within the turbine engine 32.

In some embodiments, referring to FIGS. 3-6, a brake 128 may be included to brake rotation of the aft open propulsor rotor 42 and/or fix rotation of the aft open propulsor rotor 42 about the propulsion system axis 24. This brake 128 may be coupled directly to the aft open propulsor rotor 42. Alternatively, the brake 128 may be coupled indirectly to the aft open propulsor rotor 42 through, for example, the power transmission arrangement 114. The brake 128 may be configured as or otherwise include a mechanical brake; e.g., a disk brake, a drum brake, etc. The brake 128 may also or alternatively be configured as an electromagnetic brake, an exemplary embodiment of which is described below in further detail. In some embodiments, the brake 128 may include a locking mechanism to hold the aft propulsor rotor 42 in place, such as in single rotor mode.

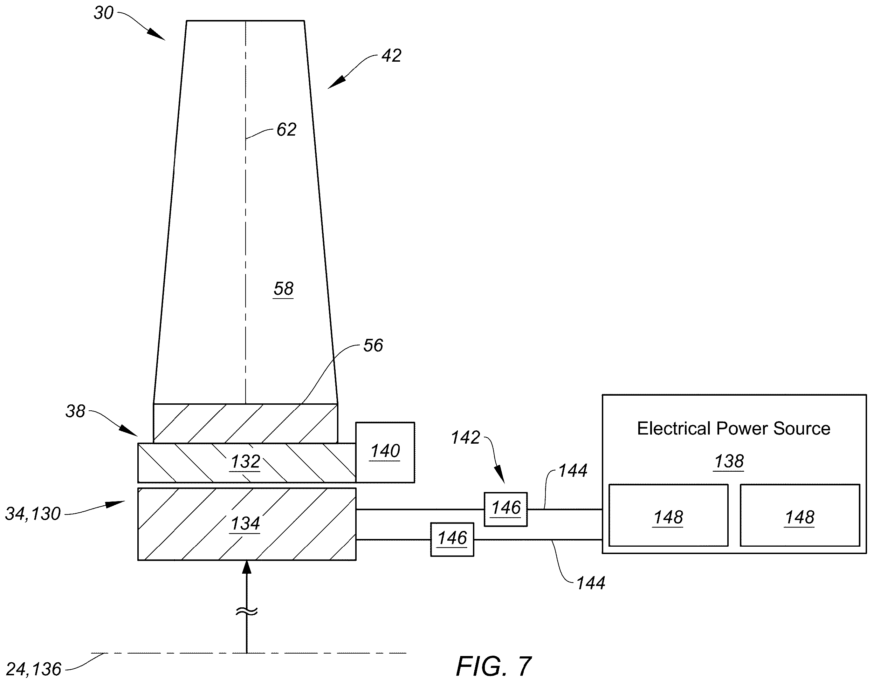

In some embodiments, referring to FIG. 7, the rotor drive system 34 may be configured as or otherwise include an electric machine 130. Here, the aft rotor drivetrain 38 may be configured as a direct coupling between the electric machine 130 and the aft open propulsor rotor 42. Alternatively, the aft rotor drivetrain 38 may be configured as or otherwise include a power transmission arrangement similar to the power transmission arrangement 114 of FIGS. 3-6.

The electric machine 130 of FIG. 7 includes an electric machine rotor 132 and an electric machine stator 134. The machine rotor 132 is rotatable about a rotational axis 136 of the machine rotor 132, which rotational axis 136 may also be an axial centerline of the electric machine 130 and coaxial with the propulsion system axis 24. This machine rotor 132 is operatively coupled to the aft open propulsor rotor 42 through the aft rotor drivetrain 38. The machine rotor 132 of FIG. 7 is radially outboard of and circumscribes the machine stator 134. With this arrangement, the electric machine 130 is configured as a radial flux electric machine. The electric machine 130 of the present invention, however, is not limited to such an exemplary rotor-stator configuration nor to radial flux arrangements. The machine rotor 132, for example, may alternatively be radially inboard of and may be circumscribed by the machine stator 134. In another example, the machine rotor 132 may be axially next to the machine stator 134 configuring the electric machine 130 as an axial flux electric machine.

The electric machine 130 of FIG. 7 may be configurable as an electric motor, an electromagnetic brake and/or an electric generator. The electric machine 130 may operate as the electric motor during the dual rotor mode. The electric machine 130 may operate as the electromagnetic brake during the single rotor mode. The electric machine 130 may operate as the electric generator during a third power generation mode of operation. Of course, in other embodiments, the electric machine 130 may alternatively be configured as a dedicated electric motor; e.g., without the electromagnetic brake functionality and without electric generator functionality.

During a motor mode of operation, the electric machine 130 may operate as the electric motor to convert electricity received from an electrical power source 138 into mechanical power. The machine stator 134, for example, may generate an electromagnetic field with the machine rotor 132 using the electricity. This electromagnetic field may drive rotation of the machine rotor 132. The machine rotor 132 may thereby drive rotation of the aft open propulsor rotor 42 through the aft rotor drivetrain 38.

During a brake mode of operation, the electric machine 130 may be operated as the electromagnetic brake to brake rotation of the aft open propulsor rotor 42 and/or rotationally fix the aft open propulsor rotor 42. The electric machine 130, for example, may be generally operated as the electric motor. However, whereas the electricity is provided to the machine stator 134 during the motor mode to drive rotation of the machine rotor 132 about the rotational axis 136, the electricity provided to the machine stator 134 is modulated during this brake mode to slow rotation of the machine rotor 132 about the rotational axis 136 and/or stop rotation of the machine rotor 132 about the rotational axis 136. Of course, a mechanical brake 140 may also or alternatively be included to brake rotation of the aft open propulsor rotor 42 and/or fix rotation of the aft open propulsor rotor 42 about the propulsion system axis 24. This mechanical brake 140 may be coupled directly to the aft open propulsor rotor 42. Alternatively, the mechanical brake 140 may be coupled indirectly to the aft open propulsor rotor 42 through, for example, the aft rotor drivetrain 38. Examples of the mechanical brake 140 include, but are not limited to, a disk brake and a drum brake. In some embodiments, the mechanical brake 140 may include a locking mechanism to hold the aft propulsor rotor 42 in place, such as in single rotor mode.

During a generator mode of operation, the electric machine 130 may operate as the electric generator to convert mechanical power received from windmilling rotation of the aft open propulsor rotor 42 into electricity. The windmilling aft open propulsor rotor 42, for example, may drive rotation of the machine rotor 132 through the aft rotor drivetrain 38. The rotation of the machine rotor 132 may generate an electromagnetic field with the machine stator 134, and the machine stator 134 may convert energy from the electromagnetic field into the electricity. The electric machine 130 may then provide this electricity to the power source 138 for further use. This generator mode may also be used to reduce or modulate propulsion system thrust output while, for example, operating the turbine engine 32 at an optimized thrust setting. In this generator mode, the forward open propulsor rotor 40 may (or may not) be rotationally driven by the low speed rotating assembly 90 (see FIG. 1) as described above.

The power source 138 is electrically coupled with the electric machine 130 through electrical circuitry 142; e.g., a power bus. This electrical circuitry 142 may include one or more electrical leads 144 (e.g., high voltage lines) and one or more electrical devices 146 for conditioning, metering, regulating and/or otherwise controlling electrical power transfer between the electric machine 130 and the power source 138. Examples of the electrical devices 146 include, but are not limited to, switches, contactors, current regulators, converters and buffers. The power source 138 may be configured to store electricity. The power source 138 may also be configured to provide electricity to the electric machine 130 and/or receive electricity from the electric machine 130. The power source 138, for example, may be configured as or otherwise include one or more electricity storage devices 148; e.g., batteries, supercapacitors, etc. The power source 138 may also or alternatively be configured as or otherwise include another electric generator.

In some embodiments, during the dual rotor mode, the electric machine 130 may be controlled to vary the ratio between the rotational speed of the forward open propulsor rotor 40 (see FIGS. 1 and 2) and the rotational speed of the aft open propulsor rotor 42 to tailor propulsion section operation to one or more propulsion system operational parameters, one or more aircraft operational parameters and/or one or more environmental conditions.

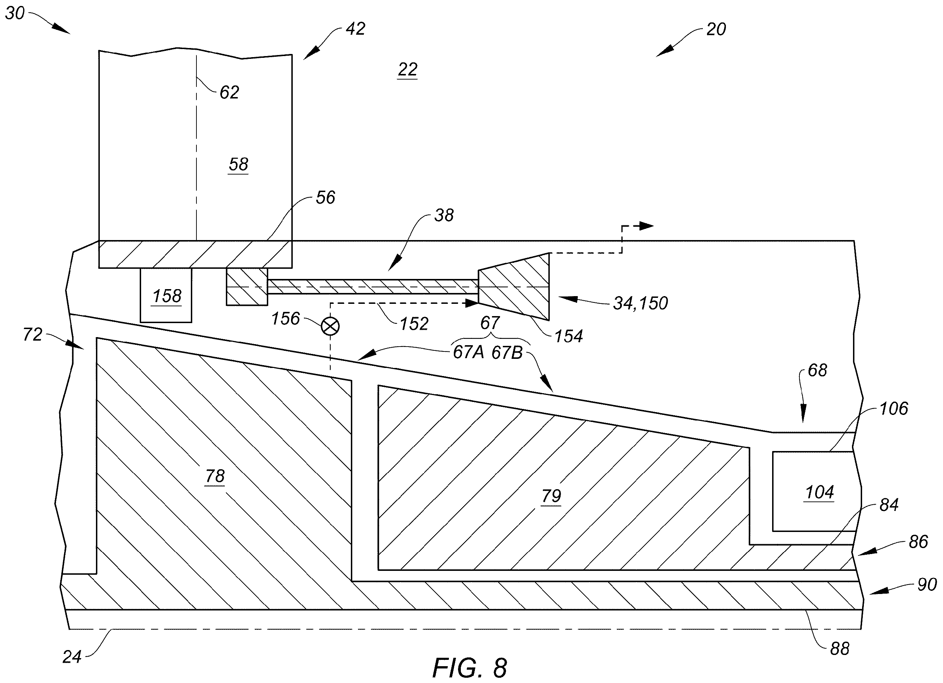

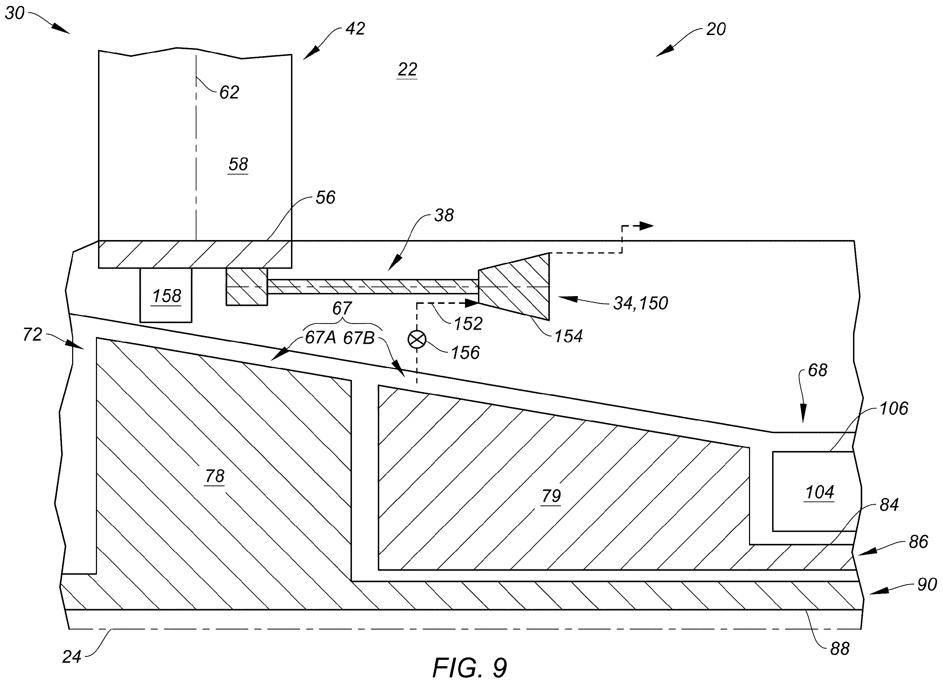

In some embodiments, referring to FIGS. 8 and 9, the rotor drive system 34 may be configured as or otherwise include an air turbine 150 and an air circuit 152. Here, the aft rotor drivetrain 38 may be configured as a direct coupling between a rotor 154 of the air turbine 150 and the aft open propulsor rotor 42. Alternatively, the aft rotor drivetrain 38 may be configured as or otherwise include a power transmission arrangement similar to the power transmission arrangement 114 of FIGS. 3-6.

The air circuit 152 is configured to bleed a portion of the core air from the engine flowpath 72 along or downstream of the compressor section 67. For example, referring to FIG. 8, the air circuit 152 bleeds the core air from the engine flowpath 72 along the compressor section 67 upstream of the HPC section 67B; e.g., along the LPC section 67A or longitudinally between (a) the LPC section 67A and its LPC rotor 78 and (b) the HPC section 67B and its HPC rotor 79. In another example, referring to FIG. 9, the air circuit 152 bleeds the core air from the engine flowpath 72 along the compressor section 67 downstream of the LPC section 67A and upstream of the combustor section 68; e.g., along the HPC section 67B or longitudinally between (a) the HPC section 67B and its HPC rotor 79 and (b) the combustor section 68. Referring again to FIGS. 8 and 9, the air circuit 152 is configured to direct the bleed air to the air turbine 150. The bleed air is then directed and expanded across the air turbine 150 to drive rotation of the air turbine rotor 154. This rotation of the air turbine rotor 154, in turn, drives the rotation of the aft open propulsor rotor 42 through the aft rotor drivetrain 38.

The air circuit 152 may include a flow regulator 156 (e.g., a valve or valve system) to regulate a flow of the bleed air to the air turbine 150. By regulating the flow of bleed air to the air turbine 150, the rotational speed of the aft open propulsor rotor 42 may also be regulated. In addition or alternatively, the air turbine 150 may be configured as a variable geometry air turbine to provide additional or alternative control over the rotational speed of the aft open propulsor rotor 42.

In some embodiments, it is contemplated the flow regulator 156 may also or alternatively be configured as a switching valve. The flow regulator 156, for example, may be configured to (a) facilitate bleeding the flow of the bleed air from the location of FIG. 8 in one mode and (b) facilitate bleeding the flow of the bleed air from the location of FIG. 9 in another mode.

In some embodiments, a brake 158 may be included to brake rotation of the aft open propulsor rotor 42 and/or fix rotation of the aft open propulsor rotor 42 about the propulsion system axis 24. This brake 158 may be coupled directly to the aft open propulsor rotor 42. Alternatively, the brake 158 may be coupled indirectly to the aft open propulsor rotor 42 through, for example, the aft rotor drivetrain 38. The brake 158 may be configured as or otherwise include a mechanical brake; e.g., a disk brake, a drum brake, etc. The brake 158 may also or alternatively be configured as an electromagnetic brake, an exemplary embodiment of which was described above in further detail.

In some embodiments, during the dual rotor mode, the air turbine 150 may be controlled to vary the ratio between the rotational speed of the forward open propulsor rotor 40 (see FIGS. 1 and 2) and the rotational speed of the aft open propulsor rotor 42 to tailor propulsion section operation to one or more propulsion system operational parameters, one or more aircraft operational parameters and/or one or more environmental conditions.

In some embodiments, during the dual rotor mode of FIG. 1, the rotational speed of the aft open propulsor rotor 42 may be less than the rotational speed of the forward open propulsor rotor 40. The rotational speed of the aft open propulsor rotor 42, for example, may be between thirty percent (30%) and fifty percent (50%) of the rotational speed of the forward open propulsor rotor 40, inclusive. In another example, the rotational speed of the aft open propulsor rotor 42 may be between ten percent (10%) and thirty percent (30%) of the rotational speed of the forward open propulsor rotor 40, inclusive. In still another example, the rotational speed of the aft open propulsor rotor 42 may be less than ten percent (10%) of the rotational speed of the forward open propulsor rotor 40.

In addition to boosting propulsion system thrust during the dual rotor mode, facilitating rotation of the aft open propulsor rotor 42 has various additional benefits. For example, when the aft open propulsor rotor 42 is rotating, the aft open propulsor rotor 42 may be more tolerant to foreign object collisions; e.g., bird strikes. In still another example, facilitating rotation of the aft open propulsor rotor 42 during ground maintenance may allow maintenance personnel to move a specific aft propulsor blade 58 of interest at bottom dead center (BDC) or at top dead center (TDC) for ease of handling.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. A propulsion system (20) for an aircraft, comprising:
a first open propulsor rotor (40);
a second open propulsor rotor (42) next to and downstream of the first open propulsor rotor (40);
a turbine engine (32) including a flowpath (72), a compressor section (67), a combustor section (68), a turbine section (69) and a rotating assembly (86,90), the flowpath (72) extending longitudinally though the compressor section (67), the combustor section (68) and the turbine section (69) from an airflow inlet (74) into the flowpath (72) to a combustion products exhaust from the flowpath (76), the rotating assembly (86,90) comprising a turbine rotor (80,81) in the turbine section (69), and the rotating assembly (86,90) configured to drive rotation of the first open propulsor rotor (40) during a first mode and a second mode; and
a drive system (34) discrete from the rotating assembly (86,90), the drive system (34) configured to drive rotation of the second open propulsor rotor (42) during the first mode, wherein the second open propulsor rotor (42) is rotationally fixed during the second mode.

2. The propulsion system (20) of claim 1, wherein the second open propulsor rotor (42) is configured as a guide vane structure for the first open propulsor rotor (40) during the second mode.

3. The propulsion system (20) of claim 1 or 2, wherein the first open propulsor rotor (40) and the second open propulsor rotor (42) are configured to rotate in opposite directions about a common axis (24) in the first mode.

4. The propulsion system (20) of claim 1, 2 or 3, wherein:
the propulsion system (20) extends along an axis (24) between an upstream end (26) of the propulsion system (20) and a downstream end (28) of the propulsion system (20); and
the first open propulsor rotor (40) is located axially between the upstream end (26) of the propulsion system (20) and the turbine engine (32).

5. The propulsion system (20) of any preceding claim, wherein the drive system (34) is configured such that a ratio of a rotational speed of the first open propulsor rotor (40) to a rotational speed of the second open propulsor rotor (42) is variable during the first mode.

6. The propulsion system (20) of any preceding claim, wherein the second open propulsor rotor (42) comprises a plurality of blades (58) arranged circumferentially about an axis (24), and each of the plurality of blades (58) has a respective blade pitch and is configured to pivot about a respective pivot axis (62) to change the respective blade pitch during at least one of the first mode or the second mode.

7. The propulsion system (20) of any preceding claim, wherein:
the drive system (34) comprises an electric machine (130); and
the drive system (34) is configured to drive the rotation of the second open propulsor rotor (42) using the electric machine (130) during the first mode.

8. The propulsion system (20) of claim 7, wherein the drive system (34) is configured to:
brake rotation of the second open propulsor rotor (42); and/or
rotationally fix the second open propulsor rotor (42) during the second mode using the electric machine (130).

9. The propulsion system (20) of claim 7 or 8, further comprising a mechanical brake (140) configured to:
brake rotation of the second open propulsor rotor (42); and/or
rotationally fix the second open propulsor rotor (42) during the second mode.

10. The propulsion system (20) of claim 7, 8 or 9, wherein:
the rotating assembly (86,90) is further configured to drive rotation of the first open propulsor rotor (40) during a third mode; and
the electric machine (130) is configurable as a generator during the third mode when a machine rotor (132) in the electric machine (130) is rotationally driven by the second open propulsor rotor (42).

11. The propulsion system (20) of any preceding claim, wherein:
the drive system (34) comprises an air turbine (150); and
the drive system (34) is configured to drive the rotation of the second open propulsor rotor (42) using the air turbine (150) during the first mode.

12. The propulsion system (20) of claim 11, wherein the drive system (34) further comprises an air circuit (152) configured to:
bleed air from the flowpath (72) along or downstream of the compressor section (67); and
direct the air to the air turbine (150).

13. The propulsion system (20) of claim 12, wherein:
the compressor section (67) includes a low pressure compressor section (67A) and a high pressure compressor section (67B); and
the air circuit (152) is configured to bleed air from the flowpath (72) upstream of the high pressure compressor section (67B).

14. The propulsion system (20) of claim 12, wherein:
the compressor section (67) includes a low pressure compressor section (67A) and a high pressure compressor section (67B); and
the air circuit (152) is configured to bleed air from the flowpath (72) downstream of the low pressure compressor section (67A).

15. The propulsion system (20) of any preceding claim, further comprising a brake (128;140;158) configured to:
brake rotation of the second open propulsor rotor (42); and/or
rotationally fix the second open propulsor rotor (42) during the second mode.
